Europäisches Patentamt

European Patent Office

Office européen des brevets

(19)

(11) EP 1 598 662 A1

(12) EUROPEAN PATENT APPLICATION

(43) Date of publication:
23.11.2005 Bulletin 2005/47

(51) Int Cl.7: G01N 21/896

(21) Application number: 04102166.8

(22) Date of filing: 17.05.2004

(84) Designated Contracting States:
AT BE BG CH CY CZ DE DK EE ES FI FR GB GR
HU IE IT LI LU MC NL PL PT RO SE SI SK TR
Designated Extension States:
AL HR LT LV MK

(71) Applicant: TOTAL PETROCHEMICALS
RESEARCH FELUY
7181 Seneffe (Feluy) (BE)

(72) Inventors:
• Stéphenne, Vincent
  B-1330, Rixensart (BE)
• Maziers, Eric
  B - 7180, Seneffe (BE)

(54) **A method for quantifying the optical properties of moulded objects**

(57)     The present invention discloses the use of a charged-couple device camera for quantifying the optical properties of moulded parts, sheets or films.

**Description**

The present invention is directed to the use of a charge-coupled device camera for measuring the contact transparency, the see-through evolution and for characterising the defects in moulded parts, sheets or films.

The methods available for estimating the transparency of an object are quite limited.

The criteria mostly used for transparency evaluation are total transmittance, haze and clarity. They are all obtained by analysing the scattering pattern of an incident light beam by the object under study.

Total transmittance is the ratio of transmitted light at all forward angles to incident light. Haze (or milkiness) characterises the loss of contrast observed when objects are seen through a scattering medium. Light scattered forward at high angles is primarily responsible for this deterioration of contrast. Clarity (or see-through quality) is a measure of the capacity of resolving details in the image as seen through the sample. Haze is defined in the ASTM D 1003 norm as the percentage of transmitted light that, when passing through the specimen, deviates from the incident beam by more than 2.5 degrees on average. On the contrary, clarity is evaluated in an angle smaller than 2.5 degrees.

All these parameters are objective and provide an independent, but complementary, information related to human vision. It means thus that they should be coupled in order to better characterise the see-through human vision.

Moreover, even though all these characteristics are distance dependent, they are evaluated for a fixed distance between the light beam and the sample. In other words, even when coupled, they are not appropriate for characterising the evolution of properties with distance.

Other methods for transparency evaluation comprise visual estimates of the see-through capability of an object and its evolution with increasing distance between the transparent object and the source. Such methods provide results that are directly representative of human vision.

Moreover, results can be obtained at various distances enabling a characterisation of contact transparency as well as see-through evolution with distance. Such methods however provide a subjective qualitative estimate, they are not quantified and are not free of errors.

As the demand for visually esthetic, transparent, see-through containers or sheets or films increases, there is a need to quantify these properties thanks to an objective method similar to human eye vision.

It is an aim of the present invention to use a charge-coupled device camera for quantifying the contact transparency of moulded parts, sheets or films.

It is also an aim of the present invention to use a charge-coupled device camera for measuring the evolution of the see-through capability of moulded parts, sheets or films as a function of the distance between the part and the source.

It is another aim of the present invention to use a charge-coupled device camera for evaluating the defects such as for example bubbles and gels in a transparent object.

It is yet another aim of the present invention to process and analyse the information collected in real time.

It is a further aim of the present invention to generate a feedback signal to correct the production parameters in real time.

It is yet a further aim of the present invention to use a charge-coupled device camera for characterising the contact transparency, see-through evolution or the defects for on-line or loop control purposes on a production line.

Accordingly, the present invention discloses the use of a charge-coupled device camera for quantifying the optical properties of moulded parts, sheets or films.

The optical properties of moulded parts, sheets or films that can be quantified with the present invention are the contact transparency, the see-through evolution or the defects characteristics (size or content for instance).

In a first embodiment, the present invention discloses a method for measuring the contact transparency of a moulded part, sheet or film that comprises the steps of:

    a) providing a charge-coupled device camera;
    b) providing a monochromatic light source;
    c) providing a standard that is positioned at the light source;
    d) setting the distance d1 between camera and standard in order to obtain a clear picture of the standard;
    e) positioning the transparent sample between the standard and the camera at a distance d2 = 0 from the standard;
    f) collecting the light emerging from the sample on the camera cell;
    g) converting the light received by each point of the camera cell into a signal associated with that point;
    h) from the collection of signals, determining the contact transparency of the standard at distance d2 = 0.

The present invention can also be used to determine the see-through evolution with distance between sample and source, i.e. for variable d2 values superior to zero.

**List of Figures.**

Figure 1 represents a typical set up showing backlight, standard, sample and camera.

Figure 2 represents the evolution of see-through of a transparent sheet for distances between sample and standard of respectively 0, 3 and 15 cm.

Figure 3 represents the transparency index expressed in % as a function of distance between standard and sample expressed in cm for 1 mm thick plates prepared from polyethylene resins R1 and R2.

Figure 4 represents the transparency index expressed in % as a function of distance between standard and sample expressed in cm for plates prepared from the same polyethylene resin R1 and having thicknesses of respectively 1 and 2 mm.

Figure 5 represents the transparency index expressed in % as a function of distance between standard and sample expressed in cm for 40 μm films prepared from polyethylene resins R1, R3, R4 and R5.

Figure 6 represents the haze expressed in % as a function of contact transparency expressed in % for a 1 mm thick plate prepared with polyethylene resins R1 to R10.

Figure 7 represents the repeatabilty of transparency index measurements for a 1 mm thick plate prepared from polyethylene resin R1.

Figure 8 represents a binary picture of bubbles for a rotomoulded part prepared from polyethylene resin R6.

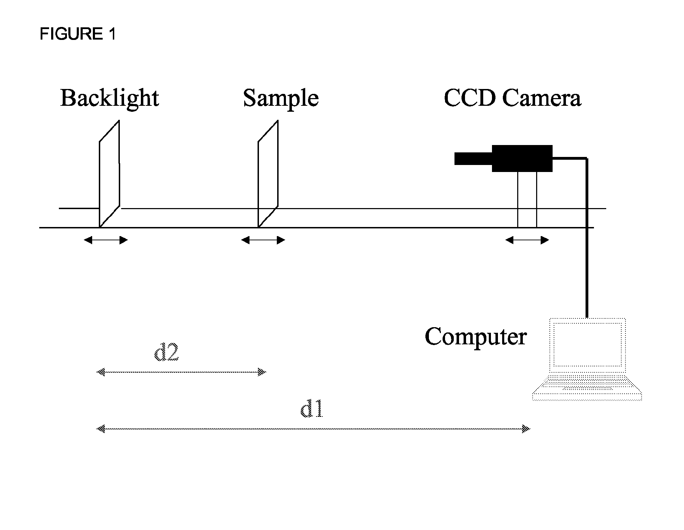

The set up camera, sample and backlight with standard is represented in Figure 1.

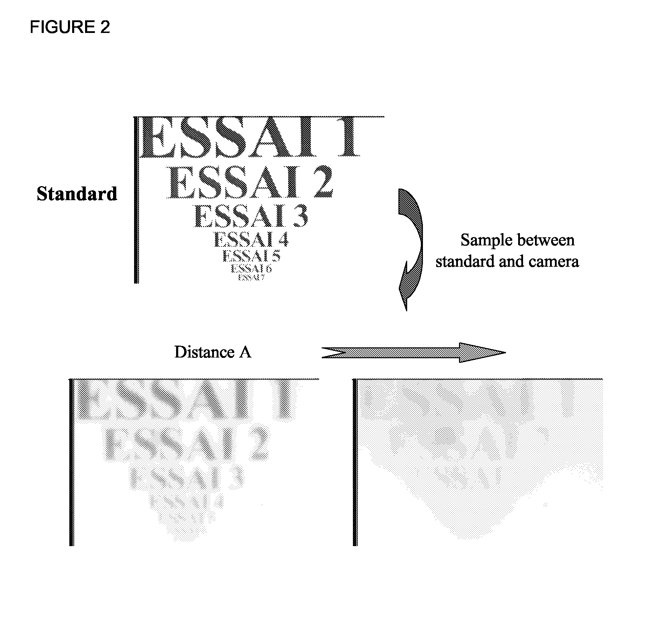

The see-through evolution is determined by positioning the transparent sample between the standard and the camera at a distance d2 from the standard, starting with the sample at position d2 = 0 (contact transparency) and progressively increasing the distance between standard and sample. Typical results are displayed in Figure 2.

The evaluation system comprises a photosensitive captor capable of transforming, at each point of the cell, the incident light into excitation energy for the electrons contained in the captor cell, wherein the number of electrons in an excited state is proportional to the intensity of the incident light. Each pixel in the picture is characterized by 256 levels of gray and the level of gray of each pixel is determined by the excitation level, the darkest level of gray being associated with the lowest excitation level and the lightest shade of gray being associated with the highest excitation level. At each distance d2 between the standard and the sample, the difference $\Delta$ between the level of gray of the standard and that of the sample is measured at each pixel. The average level of gray of the picture is calculated at each position d2 of the sample and the difference $\Delta\text{gray}_{d2}$ between the average level of gray of the picture when the sample is at a distance d2 from the standard and that of the picture without sample can be determined.

A transparency index at distance d2 $\text{Ti}_{d2}$ can be calculated from this difference of gray level. It is defined as

$$\text{Ti}_{d2} = (1 - \Delta\text{gray}_{d2}/255)*100 \text{ (in \%)}$$

The transparency index $\text{Ti}_{d2}$ decreases with increasing distance d2 between standard and sample.

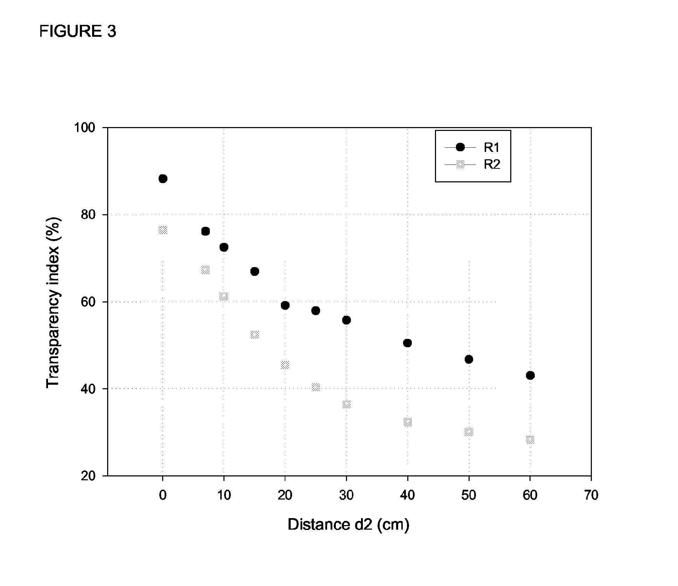

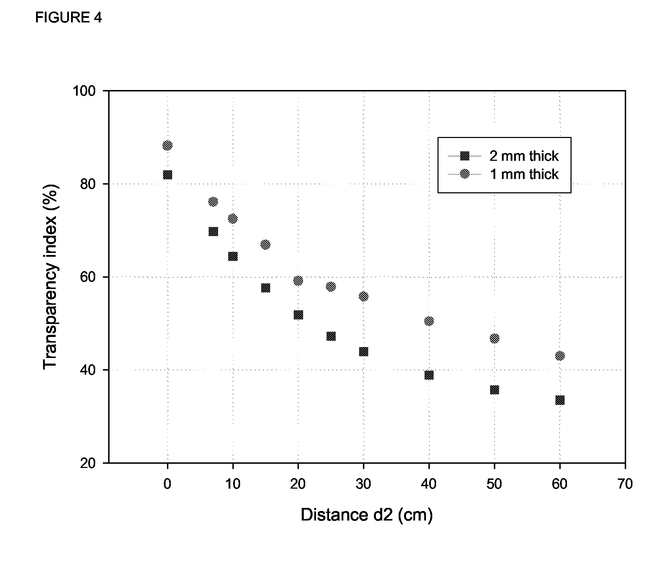

Typical results for a 1 mm thick plate are displayed in Figure 3 and the influence of plate thickness on the transmittance can be seen in Figure 4.

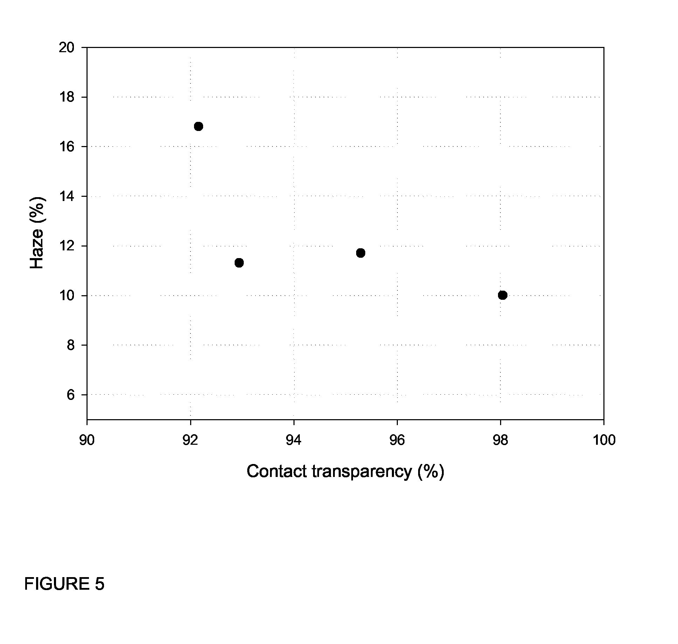

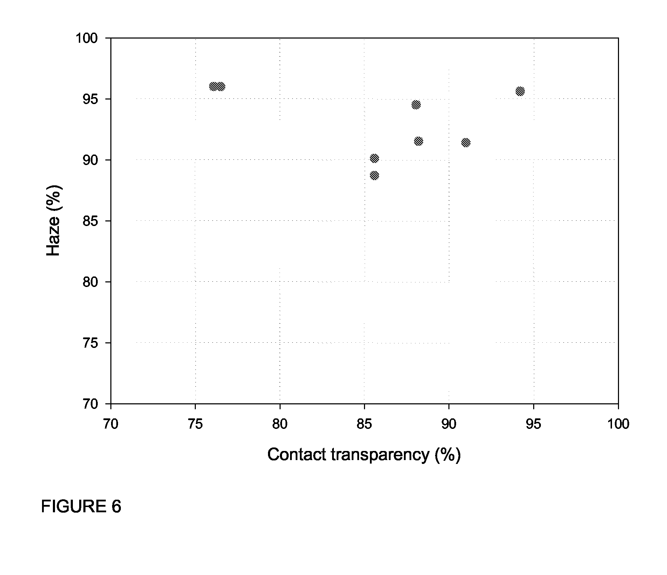

In case of semi-transparent thermoplastics like polyethylene, it is commonly accepted that the haze method, described in ASTM D 1003, is well adapted to measure the optical properties of films for which the haze level is of less than 50 %. It can be observed in Figure 5 that transparency contact is well correlated with haze measurements in polyethylene films. For haze values larger than 50 %, that are typical of thick plates or moulded parts, the haze method is not accurate at all as the saturation level is reached immediately. This behaviour is exemplified in Figure 6 that represents the haze as a function of contact transparency for a 1 mm thick plate, The haze is of over 90 % and remains at that level for a range of contact transparencies of from 70 to 95 %. The contact transparency is thus much better suited to measure the transparency of thick objects than the conventional haze method.

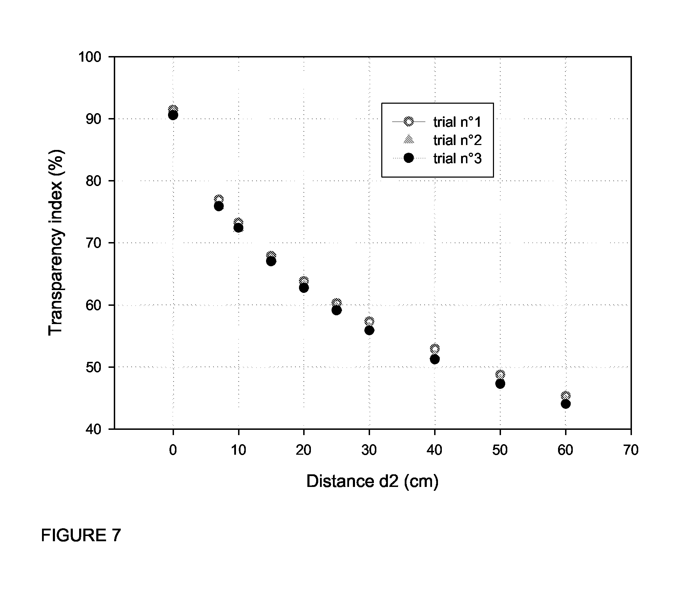

The present method is perfectly repeatable as can be seen on Figure 7. Several transparency measurements performed on the same sample gave identical results.

The defects that can be quantified with the present invention comprise the bubbles, the gels or the impurities contained in a moulded part, sheet or film. The camera set up is the same as that used to determine the contact transparency: the sample is placed between the monochromatic light source and the camera.

In this second embodiment, the present invention discloses a method for quantifying the defects contained in a moulded part, sheet or film that comprises the steps of:

a) providing a charge-coupled device camera;
b) providing a monochromatic light source;
c) setting the distance d1 between camera and the light source in order to obtain a clear picture;
d) positioning the transparent sample between the light source and the camera at a distance d2 from the light source,
e) collecting the light emerging from the sample on the camera cell;
f) converting the light received at each point of the camera cell into a signal associated with that point;
g) from the signals, determining the number and characteristics of the defects.

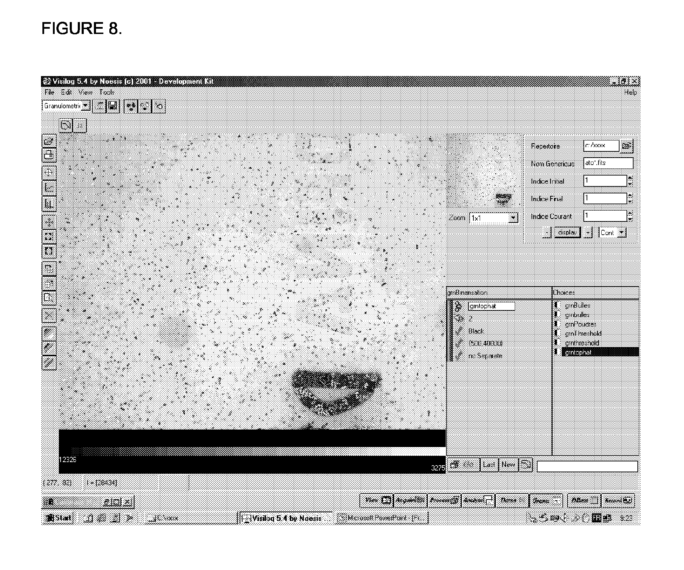

A light intensity threshold is determined, its height depending upon the nature and the thickness of the sample under study. The photosensitive camera cell receives at each point the light emerging after its passage through the sample and transforms it into an electrical signal associated with each point. If the signal intensity falls below the predetermined threshold, it is set to zero and the pixel is not activated at all, it is set at the darkest level of gray. If the signal intensity is above the predetermined threshold, it is set to 100 % and the pixel is fully activated, it is set at the lightest level of gray. The picture is thus binarised. A typical result for bubble defect is presented in Figure 8.

The defects parameters that can be derived by the present method are:

- the number N of defects in the sample
- the number Na of defects per $mm^2$
- the total area A covered by defects
- the fractional area of total picture Aa covered by defects
- the average distance $D_{av}$ between defects
- the perimeter of one defect Cr based on Crofton's integral
- the equivalent diameter $D_{eq}$ of one defect
- the largest side L of one defect
- the smallest side W of one defect
- the orientation of the largest side LO
- the orientation of the smallest side WO

The average distance between two bubbles $D_{av}$ is defined as $D_{av} = 4 (1 - Aa)/Sv$
wherein $Sv = 4\pi (D_{eq}/2)^2 . Aa / ((4\pi/3) (D_{eq}/2)^3)$
wherein the equivalent bubble diameter $D_{eq}$ is defined in terms of the average surface of one bubble S by the equation $S = 4\pi (D_{eq}/2)^2$.

### Examples.

The CCD sensor used in the present application is a megapixel progressive scan interline CCD with on-chip circuits commercialised by Kodak.
It has the following parameters:

- architecture : interline CCD, progressive scan, non-interlaced
- pixel count: 1000(H) x 1000(V)
- pixel size : 7.4 microns(H) x 7.4 microns(V)
- photosensitive area : 7.4 mm(H) x 7.4 mm(V)
- output sensitivity : 12 microvolt/electron
- saturation signal : 40,000 electrons
- dark noise : 40 electrons rms
- dark current (typical) : < 0.5 $nA/cm^2$
- dynamic range : 60 dB
- quantum efficiency at 500, 540, 600 nm : 36%, 33%, 26%
- blooming suspension : 100X
- image lag : < 10 electrons

- smear: < 0.03%
- maximum data rate : 40 MHz/channel (2 channels)
- integrated vertical clock drivers
- integrated correlated double sampling (CDS)
- integrated electronic shutter driver

The high performance 15-bit (16 bits - 1 bit for control) CCD sensor with transparent gate electrode provides 32768 unsigned levels of grey, allows the acquisition of about 10,000 frames/s and covers a broad spectrum of from 400 to 1000 nm.

Several resins have been tested.

Resin R1 is a metallocene produced polyethylene resin sold by ATOFINA under the name Finacene® M3410.

Resin R2 is a Ziegler-Natta (ZN) bimodal polyethylene resin sild by ATOFINA under the name Finathene® BM593.

Resins R3 to R9 are metallocene-prepared polyethylene resins. The metallocene catalyst component was ethylene bis(4,5,6,7- tetrahydro-1-indenyl) zirconium dichloride (THI).

Resin R10 was prepared with bis(n-butyl-cyclopentadienyl) zirconium dichloride (n-butyl) metallocene catalyst component.

The properties of the resins are summarised in Table I.

TABLE I.

|  | Catalyst | HLMI (dg/min) | MI2 (dg/min) | Density (g/cc) |
|---|---|---|---|---|
| R1 | THI | 25 | 0.9 | 0.934 |
| R2 | ZN | 26 | 0.27 | 0.959 |
| R3 | THI | 19 | 0.4 | 0.934 |
| R4 | THI | 22 | 0.6 | 0.934 |
| R5 | THI | 20 | 0.5 | 0.934 |
| R6 | THI | - | 8 | 0.938 |
| R7 | THI | - | 2 | 0.950 |
| R8 | THI | - | 0.9 | 0.927 |
| R9 | THI | - | 8 | 0. 934 |
| R10 | n-butyl | - | 6 | 0.934 |

The melt indices HLMI and MI2 are measured using the method of standard test ASTM D 1238 at a temperature of 190 °C and respectively under a load of 21.6 kg and under a load of 2.16 kg.

The density is measured following the method of standard test ASTM 1505, at a temperature of 23 °C.

Plates having a thickness of 1 mm and of 2 mm were prepared by compression moulding.

Films having a thickness of 40 μm were prepared on a Macchi blown film line.

The standard was positioned at the light source and the camera was set at a distance of 70 cm from the light source in order to have a clear picture of the standard. The sample was progressively moved away from the standard.

The transparency results for resins R1 and R2 are displayed in Figure 3. The transparency index was seen to decrease as the sample was moved away from the standard, said decrease depending upon the nature of the resin.

In order to evaluate the influence of thickness, two sheets, prepared with resin R1, and having respectively a thickness of 1 mm and of 2 mm were tested. The results are displayed in Figure 4 and showed that all other parameters being equal, the transparency decreased with increasing thickness of the sample.

By comparing figures 5 and 6 it could de determined that, whereas haze and contact transparency correlate well for thin films as exemplified on Figure 5, the contact transparency was a much more accurate parameter for thick samples as exemplified on Figure 6. Indeed, the haze remained at a high value of about 90 % for all samples whereas the contact transparency showed a variability of from 75 to 98%.

For the evaluation of defects, a large rotomoulded part was prepared on ROTOSPEED rotational moulding machine with resin R6. The defect under study was the bubble content.

The results are displayed in Table II and Figure 8.

TABLE II.

| | Na | A | Aa | $D_{av}$ | S | Cr | $D_{eq}$ | W | L | WO | LO | flattening |
|---|---|---|---|---|---|---|---|---|---|---|---|---|
| | mm$^{-2}$ | μm$^2$ | μm$^2$ | μm | μm$^2$ | μm | μm | μm | μm | ° | ° | |
| min | 1.637 | 2.35.10$^8$ | 0.077 | 51.99 | 8087 | 140.1 | 101.5 | 89.9 | 125.6 | 0 | 0 | 1.05 |
| max | | | | | 2757686 | 20028 | 1873.8 | 2056.4 | 8093.5 | 162 | 162 | 11.25 |
| average | | | | | 46892 | 677.9 | 211.1 | 193.9 | 307.3 | 32.7 | 62.6 | 1.59 |
| st.dev. | | | | | 80926 | 758.9 | 123.1 | 128.0 | 247.8 | 48.0 | 42.2 | 0.41 |

The flattening is the ratio L/W of the largest dimension over the smallest dimension.

**Claims**

1. Use of a charged-couple device camera for quantifying the optical properties of moulded parts, sheets or films.

2. Use of claim 1 wherein the optical properties are the contact transparency, the see-through evolution or the defects content of moulded parts, sheets or films.

3. Use according to claim 1 or claim 2 on a production line for on-line or loop control purposes.

4. A method for quantifying the optical properties of a moulded part, sheet or film that comprises the steps of:

    a) providing a charge-coupled device camera;
    b) providing a monochromatic light source;
    c) optionally providing a standard that is positioned at the light source;
    d) setting the distance d1 between the camera and the light source in order to obtain a clear picture of said light source;
    e) positioning the transparent sample between the light source and the camera at a distance d2 from the light source;
    f) collecting the light emerging from the sample at each point of the photosensitive camera cell;
    g) converting the light received by each point of the photosensitive camera cell into a signal associated with that point;
    h) from the collection of signals of step g), determining the position and magnitude of the desired optical property.

5. The method of claim 4 wherein the desired property is the contact transparency and wherein the standard of step c) must be present.

6. The method of claim 5 wherein the signal of step g) associated with each point of the photosensitive cell is an electrical signal that is proportional to the intensity of the incident light at that point.

7. The method of claim 6 wherein the electrical signals associated with a picture are converted into a measure of opacity for that picture.

8. The method according to any one of claims 4 to 7 wherein the distance d2 between the light source and the sample is varied in order to determine the evolution of opacity as a function of said distance between the sample and the light source.

9. The method of claim 4 wherein the optical property is a defect such as bubbles, gels or impurities.

10. The method of claim 9 wherein the picture is binarised by thresholding the light intensity received at each point of the photosensitive camera cell in order to determine the position and shape characteristics of each defect.

FIGURE 1

FIGURE 2

Standard

Sample between
standard and camera

Distance A

FIGURE 3

FIGURE 4

FIGURE 5

FIGURE 6

FIGURE 7

FIGURE 8.

**European Patent Office**

## EUROPEAN SEARCH REPORT

Application Number

EP 04 10 2166

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 1 378 336 A (ATOFINA RES) 7 January 2004 (2004-01-07) * abstract; claims 1,8; figures 1-11 * * paragraph [0001] * * paragraph [0012] * * paragraph [0017] - paragraph [0020] * * paragraph [0023] - paragraph [0026] * * paragraph [0054] - paragraph [0055] * ----- | 1-3 | G01N21/896 |
| X | EP 0 428 751 A (ISHIKAWAJIMA HARIMA HEAVY IND) 29 May 1991 (1991-05-29) * abstract; figures 3-5 * * page 3, line 3 - line 6 * * page 4, line 42 - page 3, line 14 * ----- | 1-10 | |
| X | WO 02/25251 A (EASTMAN CHEM CO) 28 March 2002 (2002-03-28) * abstract; figures 1-11 * * page 2, line 19 - line 28 * * page 4, line 13 - line 21 * * page 5, line 15 - line 29 * * page 12, line 11 - page 13, line 23 * ----- | 1-10 | |
| X | US 6 011 620 A (NELMS ANTHONY SCOTT ET AL) 4 January 2000 (2000-01-04) * abstract; figures 4,6-8,10-15 * * column 4, line 31 - column 5, line 18 * ----- | 1-10 | TECHNICAL FIELDS SEARCHED (Int.Cl.7) G01N |
| X | WO 97/43624 A (BJOERK SVANTE ; SVANTE BJOERK AB (SE)) 20 November 1997 (1997-11-20) * abstract; figures 1-3 * * page 4, line 11 - page 5, line 16 * ----- | 1-10 | |
| X | EP 0 926 486 A (OWENS BROCKWAY GLASS CONTAINER) 30 June 1999 (1999-06-30) * abstract; figure 1 * * paragraph [0011] * ----- -/-- | 1-10 | |

The present search report has been drawn up for all claims

| Place of search | Date of completion of the search | Examiner |
|---|---|---|
| The Hague | 12 October 2004 | Bockstahl, F |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................
& : member of the same patent family, corresponding document

EPO FORM 1503 03.82 (P04C01)

**European Patent Office**

## EUROPEAN SEARCH REPORT

Application Number

EP 04 10 2166

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 0 343 664 A (KIRIN BREWERY) 29 November 1989 (1989-11-29) | 1-3 | |
| A | * abstract; figure 1 * ----- | 4-10 | |
| X | US 2003/214649 A1 (YAGITA KIYOSHI) 20 November 2003 (2003-11-20) | 1-3 | |
| A | * abstract; figures 1-22 * ----- | 4-10 | |
| A | US 5 666 199 A (HESS KEVIN J ET AL) 9 September 1997 (1997-09-09) * abstract; figures 1,2 * ----- | 1-10 | |

TECHNICAL FIELDS SEARCHED (Int.Cl.7)

The present search report has been drawn up for all claims

| Place of search | Date of completion of the search | Examiner |
|---|---|---|
| The Hague | 12 October 2004 | Bockstahl, F |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

................................................................................
& : member of the same patent family, corresponding document

EPO FORM 1503 03.82 (P04C01)

**ANNEX TO THE EUROPEAN SEARCH REPORT**

**ON EUROPEAN PATENT APPLICATION NO.**                    EP 04 10 2166

This annex lists the patent family members relating to the patent documents cited in the above-mentioned European search report.
The members are as contained in the European Patent Office EDP file on
The European Patent Office is in no way liable for these particulars which are merely given for the purpose of information.

12-10-2004

| Patent document cited in search report | | Publication date | Patent family member(s) | | Publication date |
|---|---|---|---|---|---|
| EP 1378336 | A | 07-01-2004 | EP | 1378336 A1 | 07-01-2004 |
|  |  |  | WO | 2004005008 A1 | 15-01-2004 |
| EP 0428751 | A | 29-05-1991 | JP | 2751410 B2 | 18-05-1998 |
|  |  |  | JP | 3002649 A | 09-01-1991 |
|  |  |  | JP | 2797474 B2 | 17-09-1998 |
|  |  |  | JP | 3041348 A | 21-02-1991 |
|  |  |  | JP | 2692299 B2 | 17-12-1997 |
|  |  |  | JP | 3130491 A | 04-06-1991 |
|  |  |  | JP | 2738066 B2 | 08-04-1998 |
|  |  |  | JP | 3130492 A | 04-06-1991 |
|  |  |  | CA | 2033096 A1 | 01-12-1990 |
|  |  |  | DE | 69029461 D1 | 30-01-1997 |
|  |  |  | DE | 69029461 T2 | 03-04-1997 |
|  |  |  | EP | 0428751 A1 | 29-05-1991 |
|  |  |  | WO | 9015322 A1 | 13-12-1990 |
|  |  |  | US | 5393378 A | 28-02-1995 |
|  |  |  | US | 5622602 A | 22-04-1997 |
| WO 0225251 | A | 28-03-2002 | US | 2002033943 A1 | 21-03-2002 |
|  |  |  | EP | 1319177 A2 | 18-06-2003 |
|  |  |  | JP | 2004509352 T | 25-03-2004 |
|  |  |  | WO | 0225251 A2 | 28-03-2002 |
| US 6011620 | A | 04-01-2000 | EP | 1070243 A1 | 24-01-2001 |
|  |  |  | WO | 9951971 A1 | 14-10-1999 |
| WO 9743624 | A | 20-11-1997 | WO | 9743624 A1 | 20-11-1997 |
| EP 0926486 | A | 30-06-1999 | US | 6067155 A | 23-05-2000 |
|  |  |  | AT | 222652 T | 15-09-2002 |
|  |  |  | AU | 746288 B2 | 18-04-2002 |
|  |  |  | AU | 9724498 A | 15-07-1999 |
|  |  |  | BR | 9805532 A | 03-11-1999 |
|  |  |  | CA | 2256192 A1 | 24-06-1999 |
|  |  |  | CN | 1240935 A ,B | 12-01-2000 |
|  |  |  | CZ | 9804268 A3 | 14-07-1999 |
|  |  |  | DE | 69807311 D1 | 26-09-2002 |
|  |  |  | DE | 69807311 T2 | 19-12-2002 |
|  |  |  | DK | 926486 T3 | 23-12-2002 |
|  |  |  | EE | 9800457 A | 16-08-1999 |
|  |  |  | EP | 0926486 A2 | 30-06-1999 |
|  |  |  | ES | 2182213 T3 | 01-03-2003 |
|  |  |  | HU | 9802908 A2 | 29-11-1999 |
|  |  |  | JP | 11248645 A | 17-09-1999 |
|  |  |  | PL | 330488 A1 | 05-07-1999 |

EPO FORM P0459

For more details about this annex : see Official Journal of the European Patent Office, No. 12/82

**ANNEX TO THE EUROPEAN SEARCH REPORT
ON EUROPEAN PATENT APPLICATION NO.**                EP 04 10 2166

This annex lists the patent family members relating to the patent documents cited in the above-mentioned European search report.
The members are as contained in the European Patent Office EDP file on
The European Patent Office is in no way liable for these particulars which are merely given for the purpose of information.

12-10-2004

| Patent document cited in search report | | Publication date | Patent family member(s) | | Publication date |
|---|---|---|---|---|---|
| EP 0926486 | A | | PT | 926486 T | 29-11-2002 |
| | | | RU | 2224241 C2 | 20-02-2004 |
| | | | ZA | 9811514 A | 21-06-1999 |
| EP 0343664 | A | 29-11-1989 | JP | 1299444 A | 04-12-1989 |
| | | | JP | 1913829 C | 23-03-1995 |
| | | | JP | 6041924 B | 01-06-1994 |
| | | | DE | 68926362 D1 | 05-06-1996 |
| | | | DE | 68926362 T2 | 12-12-1996 |
| | | | EP | 0343664 A2 | 29-11-1989 |
| | | | US | 4948956 A | 14-08-1990 |
| US 2003214649 | A1 | 20-11-2003 | JP | 2004045364 A | 12-02-2004 |
| US 5666199 | A | 09-09-1997 | NONE | | |

EPO FORM P0459

For more details about this annex : see Official Journal of the European Patent Office, No. 12/82